# EUROPÄISCHE PATENTSCHRIFT

(11) **EP 3 691 892 B1**
(45) Veröffentlichungstag und Bekanntmachung des Hinweises auf die Patenterteilung: **15.12.2021**
(21) Anmeldenummer: 18765367.0
(22) Anmeldetag: 23.08.2018
(51) Int. Cl.: B32B 17/10, B60J 7/04

(54) **VERFAHREN ZUR HERSTELLUNG EINER FAHRZEUGSCHEIBE**
METHOD FOR MANUFACTURING A VEHICULAR GLAZING
PROCÉDÉ POUR LA FABRICATION D'UN VITRAGE DE VÉHICULE

(30) Priorität: 04.10.2017 DE 102017122972
(43) Veröffentlichungstag der Anmeldung: 12.08.2020
(73) Patentinhaber: Webasto SE, 82131 Stockdorf (DE)
(72) Erfinder: BUCHMANN, Max, 82131 Stockdorf (DE); DIETRICH, Jonas, 82131 Stockdorf (DE); VILSMAYER, Swen, 82131 Stockdorf (DE); SCHMITT, Linda, 82131 Stockdorf (DE); LORENZ, Steffen, 82131 Stockdorf (DE); BAIERL, Daniela, 82131 Stockdorf (DE)
(74) Vertreter: advotec.
(86) Internationale Anmeldenummer: PCT/EP2018/072704
(87) Internationale Veröffentlichungsnummer: WO 2019/068390

(56) Entgegenhaltungen:
- EP-A1- 2 700 502
- WO-A1-2016/196531
- DE-A1-102007 037 891
- US-A1- 2016 243 773

## Beschreibung

Die Erfindung betrifft ein Verfahren zur Herstellung einer Fahrzeugscheibe.

Fahrzeugscheiben sind aus der Praxis bekannt und können als verstellbare oder feste Dachelemente eines Kraftfahrzeuges eingesetzt werden. Es sind Fahrzeugscheiben insbesondere bekannt, die jeweils einen plattenartigen Scheibenkörper umfassen, der in der Regel aus Glas besteht und die Außenhaut des Dachelements bildet. An seiner Innenseite ist der Scheibenkörper mit einer Flüssigkristallanordnung versehen, die elektrisch schaltbar ist und so die Lichtdurchlässigkeit der Fahrzeugscheibe vorgibt. In Abhängigkeit vom Schaltzustand der Flüssigkristallanordnung ist die Fahrzeugscheibe entweder weitgehend lichtdurchlässig oder weitgehend lichtundurchlässig. Die Flüssigkristallanordnung bildet also eine Beschattungsanordnung der Fahrzeugscheibe.

Des Weiteren ist es bekannt, Flüssigkristalle in Tröpfchenform in ein Polymer einzubinden und so Flüssigkristallzellen auszubilden. Im Grundzustand sind die Flüssigkristalle ungeordnet, weswegen im Wesentlichen keine Lichttransmission möglich ist. Es liegt vielmehr ein milchiges Erscheinungsbild vor. Wenn hingegen an die Flüssigkristallzellen Spannung angelegt wird, richten sich die Flüssigkristalle aus, so dass Licht transmittiert werden kann.

Ferner ist es bekannt, bei Fahrzeugscheiben so genannte SPD (suspended particle device)-Folien einzusetzen, um eine Beschattungseinrichtung auszubilden. SPD-Folien umfassen in einer entsprechenden Zelle kleine, stäbchenförmige Partikel, die in einen dünnen Kunststofffilm eingebunden und zunächst willkürlich ausgerichtet sind. Unter einem elektrischen Feld richten sich die Partikel aus, so dass Licht transmittiert werden kann. Jedoch besteht das Problem, dass solche SPD-Folien nur in blau und nicht in einer neutralen Farbe herstellbar sind, die bei einem Kraftfahrzeug ohne weiteres eingesetzt werden kann.

Bisher besteht grundsätzlich das Problem, eine gewölbte Fahrzeugscheibe, insbesondere eine dreidimensional gewölbte Fahrzeugscheibe, mit einer Funktionsanordnung, wie einer Flüssigkristallanordnung, zu versehen und ein gleichmäßiges Erscheinungsbild und eine gleichmäßige Funktion über die Fläche der Scheibe zu realisieren.

Der Erfindung liegt daher die Aufgabe zugrunde, ein Verfahren zur Herstellung einer Fahrzeugscheibe mit einer Funktionsanordnung zu schaffen, die bei gewölbten Scheibenkörpern ein gleichmäßiges Erscheinungsbild bzw. Funktionsverhalten über die gewünschte Fläche des gewölbten Scheibenkörpers hat.

Diese Aufgabe ist erfindungsgemäß durch das Verfahren zur Herstellung einer Fahrzeugscheibe mit den Merkmalen des Patentanspruchs 1 gelöst.

Das Verfahren nach der Erfindung, gemäß dem eine Fahrzeugscheibe mit einem ersten gewölbten Scheibenkörper und einem zweiten gewölbten Scheibenkörper und mindestens einer zwischen den beiden Scheibenkörpern angeordneten Funktionsfolienanordnung herstellbar ist, umfasst mithin folgende Schritte:
- Bereitstellen des ersten gewölbten Scheibenkörpers, welcher eine Innenseite und eine Außenseite aufweist;
- Bereitstellen der Funktionsfolienanordnung und Anordnen derselben in planer und ebener Form mit einer waagerechten Ausrichtung;
- Aufbringen eines ersten Klebstoffsystems auf eine Fläche der Funktionsfolienanordnung, so dass das Klebstoffsystem an der Funktionsfolienanordnung in ausgehärteter Form vorliegt;
- Anformen der mit dem ausgehärteten Klebstoffsystem versehenen Funktionsfolienanordnung an der Innenseite des ersten Scheibenkörpers, so dass die Funktionsfolienanordnung einer Wölbung des ersten Scheibenkörpers folgt;
- Bereitstellen des zweiten gewölbten Scheibenkörpers und Auftragen eines zweiten Klebstoffsystems in flüssiger Form;
- Anbinden des zweiten Scheibenkörpers mittels des zweiten Klebstoffsystems in dessen flüssigen Zustand zur Herstellung eines Scheibenverbundes, der den ersten und den zweiten Scheibenkörper umfasst; und
- anschließendes Aushärten des zweiten Klebstoffsystems.

Bei dem Verfahren nach der Erfindung wird also die Funktionsfolienanordnung vor dem Anformen an den ersten Scheibenkörper mit dem ersten Klebstoffsystem versehen, die durch die plane und ebene Anordnung der Funktionsfolienanordnung mit einer konstanten Dicke ausgebildet werden kann. Dadurch, dass das Klebstoffsystem in ausgehärteter Form vorliegt, wenn die Funktionsfolienanordnung an den ersten Scheibenkörper angebunden wird, kann gewährleistet werden, dass die Funktionsfolienanordnung über ihre gesamte Fläche hinweg einen konstanten und einheitlichen Abstand zu dem ersten gewölbten Scheibenkörper hat. Das Klebstoffsystem muss zur Ausbildung einer festen Verbindung zu dem Scheibenkörper selbstverständlich so ausgewählt sein, dass es auch im ausgehärteten Zustand an seiner Oberseite, das heißt an seiner der Funktionsfolienanordnung abgewandten Seite eine hohe Klebrigkeit bzw. einen hohen Tack aufweist.

Das Anformen der mit dem ausgehärteten Klebstoffsystem versehenen Funktionsfolienanordnung an die Innenseite des ersten Scheibenkörpers kann manuell oder auch maschinell bzw. automatisiert, beispielsweise nach einem Rollenlaminationsverfahren oder dergleichen erfolgen.

Das Aufbringen des ersten Klebstoffsystems auf die Funktionsfolienanordnung und das Anformen derselben an den ersten Scheibenkörper kann bei moderaten Umgebungstemperaturen, beispielsweise in einem Temperaturbereich zwischen 10 °C und 50 °C, insbesondere bei Raumtemperatur erfolgen. Dies gewährleistet, dass Funktionselemente der Funktionsfolienanordnung nicht durch hohe Prozesstemperaturen beschädigt werden können. Es können also bei Anwendung des Verfahrens nach der Erfindung negative Einflüsse auf die Funktionsfolienanordnungen und auch Spannungen im System ausgeschlossen werden, die bei Nutzung hoher Prozesstemperaturen durch das Abkühlen entstehen könnten.

Der zweite gewölbte Scheibenkörper wird im flüssigen Zustand des zweiten Klebstoffsystems an den schon hergestellten Schichtaufbau mit dem ersten Scheibenkörper und der mindestens einen Funktionsfolienanordnung angebunden. Der konstante Abstand zwischen dem zweiten Scheibenkörper und der zuletzt angebundenen Funktionsfolienanordnung kann durch ein entsprechendes Werkzeug gehalten werden, bis das zweite Klebstoffsystem ausgehärtet ist.

Bei einer speziellen Ausführungsform des Verfahrens nach der Erfindung werden mehrere Funktionsfolienanordnungen bereitgestellt und jeweils mit dem ersten Klebstoffsystem versehen, und zwar jeweils in planer und ebener Anordnung und waagerechter Ausrichtung, wobei das jeweilige Klebstoffsystem vor dem Anformen an den schon hergestellten Schichtaufbau in ausgehärteter Form vorliegt, wodurch ein konstanter Abstand der betreffenden Funktionsfolienanordnung zu dem schon hergestellten Schichtaufbau über die gesamte Fläche eingestellt werden kann. Vor dem Anbinden des zweiten Scheibenkörpers werden bei dieser Ausführungsform also mehrere Funktionsfolienanordnungen übereinander und nacheinander an den ersten Scheibenkörper angebunden.

Bei einer speziellen Ausführungsform des Verfahrens nach der Erfindung hat das zweite Klebstoffsystem eine Zusammensetzung, die der Zusammensetzung des ersten Klebstoffsystems entspricht. Zweckmäßigerweise ist dieses Klebstoffsystem im ausgehärteten Zustand klar und transparent.

Beispielsweise ist das erste Klebstoffsystem aus einem Zweikomponentenkleber, insbesondere einem Zweikomponenten-Silikon- oder Zweikomponenten-Acrylat-Kleber gebildet, der in flüssiger Form auf die eben angeordnete Funktionsfolienanordnung aufgebracht wird und dann auf der Funktionsfolienanordnung in deren ebenen Anordnung aushärtet. Durch die ebene Anordnung der Funktionsfolienanordnung und den flüssigen Zustand des Klebstoffsystems stellt sich gravitationsbedingt eine gleichmäßige Schichtdicke des Klebstoffsystems ein, mit der das Klebstoffsystem bzw. die beiden Komponenten des Klebstoffsystems miteinander aushärten.

Bei einer alternativen Ausführungsform des Verfahrens nach der Erfindung wird das erste Klebstoffsystem in Form einer Einschicht-Kleberfolie auf die Funktionsfolienanordnung aufgebracht. Eine Einschicht-Kleberfolie ist eine trägerfreie Folie, die allein aus dem Klebstoffsystem besteht und eine konstante Dicke hat und in ausgehärtetem Zustand an die Funktionsfolienanordnung angebunden wird.

Denkbar ist es, dass beim Anbinden mehrerer Funktionsfolienanordnungen das erste Klebstoffsystem variiert und an die jeweilige Funktionsfolienanordnung angepasst wird. Das erste Klebstoffsystem, das für eine Funktionsfolienanordnung genutzt wird, kann sich also von dem ersten Klebstoffsystem, das für eine andere Funktionsfolienanordnung genutzt wird, unterscheiden.

Um eine ebene, waagerechte Anordnung der Funktionsfolienanordnung beim Aufbringen des ersten Klebstoffsystems zu gewährleisten, wird die Funktionsfolienanordnung vorzugsweise zum Ausführen dieses Prozessschritts auf einen Vakuum-Tisch aufgelegt.

Der erste gewölbte Scheibenkörper ist entweder der Scheibenkörper des resultierenden Scheibenverbundes, der der Fahrzeugumgebung zugewandt ist, oder derjenige, der einem Fahrzeuginnenraum zugewandt ist. Zweckmäßigerweise ist der erste Scheibenkörper aber derjenige, der dem Fahrzeuginnenraum zugewandt ist, so dass dessen Innenseite eine konvexe, nach außen gerichtete Wölbung hat. In diesem Fall ist zweckmäßigerweise der zweite Scheibenkörper beim Anbinden an die Funktionsfolienanordnung unten angeordnet, so dass eine konkav gewölbte Seite des unten angeordneten Scheibenkörpers nach oben weist. Auf diese Weise kann beim Anbinden des zweiten Scheibenkörpers etwaige Luft nach oben aus dem zweiten Klebstoffsystem ausgedrückt werden, was wiederum ein blasenfreies Aushärten des zweiten Klebstoffsystems unterstützt.

Um die Funktionsfolienanordnungen vor Umwelteinflüssen, wie Feuchtigkeit und dergleichen, zu schützen, wird an dem Scheibenverbund zweckmäßigerweise am umlaufenden Rand eine Randversiegelung ausgebildet. Die Randversiegelung kann aus dem zweiten Klebstoffsystem gebildet und gleichzeitig mit dem Anbinden des zweiten Scheibenkörpers in einer entsprechenden Werkzeugform ausgebildet werden.

Bei einer speziellen Ausführungsform des Verfahrens nach der Erfindung wird eine Fahrzeugscheibe hergestellt, die eine Beschattungsanordnung aufweist, welche durch mindestens eine Funktionsfolienanordnung gebildet ist. Die Funktionsfolienanordnung umfasst hierzu beispielsweise eine Flüssigkristallanordnung, die durch Anlegen einer elektrischen Spannung zwischen einer Transmissionsstellung und einer Sperrstellung schaltbar ist. Die als Wechselspannung ausgebildete Spannung kann insbesondere unter 30 V liegen. Die Frequenz der Wechselspannung beträgt beispielsweise 60 Hz, kann aber je nach gewünschter Geschwindigkeit der Ausrichtung der Flüssigkristalle der Flüssigkristallanordnung auch höher sein und bis zu 100 bis 120 Hz betragen oder auch niedriger sein.

Die Flüssigkristallanordnung umfasst vorzugsweise zwei Folien, zwischen denen eine Flüssigkristallzelle angeordnet ist. Durch die Anordnung der Flüssigkristallzelle zwischen den beiden Folien kann die Flüssigkristallanordnung an die Form des gewölbten Scheibenkörpers angepasst werden, welcher aus Glas oder auch einem Kunststoff, wie Polycarbonat oder PMMA, bestehen kann. Dadurch ist es möglich, einen gewölbten Scheibenkörper mit einer Flüssigkristallanordnung zu versehen, die über die gesamte Erstreckung ein einheitliches Beschattungsverhalten, das heißt in Abhängigkeit vom Schaltzustand ein konstantes Transmissionsverhalten hat. Durch die Anordnung der Flüssigkristallzelle zwischen zwei Folien ist eine gute Verformbarkeit der Flüssigkristallanordnung gewährleistet.

Eine weitere Funktionsfolienanordnung, die bei dem Verfahren nach der Erfindung mittels des ersten Klebstoffsystems insbesondere im Zusammenhang mit einer Flüssigkristallanordnung in den Scheibenverbund eingebunden werden kann, umfasst beispielsweise eine Polarisatorschicht. Die Polarisatorschicht, die zwischen der Flüssigkristallanordnung und dem ersten gewölbten Scheibenkörper oder auch an der dem ersten Scheibenkörper abgewandten Seite der Flüssigkristallanordnung angeordnet sein kann, hat vorzugsweise eine Polarisationsrichtung, die rechtwinkelig zu einer Polarisationsrichtung der Flüssigkristallzelle im ungeschalteten Zustand ausgerichtet ist. Der geschaltete Zustand der Polarisatorschicht ist dann dem Transmissionszustand zugeordnet. Denkbar ist es aber auch, dass im ungeschalteten Zustand der Flüssigkristallzelle die Polarisationsrichtung der Polarisatorschicht parallel zu Polarisationsrichtung der Flüssigkristallzelle ist, so dass dann der Transmissionszustand der Anordnung vorliegt.

Des Weiteren ist es vorteilhaft, wenn das erste Klebstoffsystem im ausgehärteten Zustand einen Brechungsindex hat, der im Wesentlichen dem Brechungsindex der Folien der Flüssigkristallanordnung entspricht. Damit kann einer Mehrfachbrechung des Lichts beim Durchlaufen der Flüssigkristallanordnung, des ersten Klebstoffsystems und der Polarisatorschicht zumindest teilweise entgegengewirkt werden.

Die beiden Folien der Flüssigkristallanordnung sind beispielsweise jeweils aus einer transparenten Polycarbonatfolie gebildet, die vorzugsweise eine Dicke zwischen 50 µm und 250 µm hat. Die beiden Folien stellen jeweils ein Substrat dar, auf dem eine leitfähige Schicht zur elektrischen Anbindung der Flüssigkristallzelle an ein Bordnetz des betreffenden Fahrzeugs angeordnet ist. Auf den leitfähigen Schichten ist jeweils zweckmäßigerweise eine Ausrichtungsschicht (alignment layer) angeordnet. Die Ausrichtungsschichten begrenzen jeweils die Flüssigkristallzelle und dienen zur Vorausrichtung der Flüssigkristalle in der Flüssigkristallzelle. Zudem sind die beiden Ausrichtungsschichten vorzugsweise durch Abstandshalter voneinander getrennt, so dass die Dicke der Flüssigkristallzelle, in der die Flüssigkristalle angeordnet sind, über die Erstreckung der Flüssigkristallanordnung zumindest weitgehend konstant ist.

Bei einer bevorzugten Ausführungsform der Fahrzeugscheibe nach der Erfindung umfasst die Flüssigkristallanordnung eine einzige Flüssigkristallzelle, die sich zumindest weitgehend über die gesamte Flüssigkristallanordnung erstreckt, die vorzugsweise den potentiellen Durchsichtsbereich der Fahrzeugscheibe abdeckt.

Denkbar ist es natürlich auch, dass die Flüssigkristallzelle segmentiert ist und schaltbare Untereinheiten aufweist.

Die beiden Scheibenkörper, die bei dem Verfahren nach der Erfindung eingesetzt werden, können jeweils eine dreidimensionale Wölbung und damit in zwei Richtungen, bei einer Dachscheibe entlang einer Fahrzeugquerrichtung und entlang einer Fahrzeuglängsrichtung, jeweils eine Wölbung mit einem Krümmungsradius zwischen 1000 mm und 10.000 mm, vorzugsweise zwischen 2000 mm und 5000 mm haben, der sich über die Wölbung ändern kann, das heißt in der jeweiligen Richtung nicht konstant sein muss. Über die Wölbung, das heißt in Scheibenquerrichtung und/oder Scheibenlängsrichtung, kann der Krümmungsradius variieren, er muss also nicht konstant sein.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel des Gegenstandes der Erfindung ist in der Zeichnung schematisch vereinfacht dargestellt und wird in der nachfolgenden Beschreibung näher erläutert. Es zeigt:
- Figur 1: eine Draufsicht auf ein Fahrzeugdach mit einer Fahrzeugscheibe, die nach dem erfindungsgemäßen Verfahren hergestellt ist;
- Figur 2: einen Schnitt durch die Fahrzeugscheibe; und
- Figuren 3a bis h: die Herstellung der Fahrzeugscheibe.

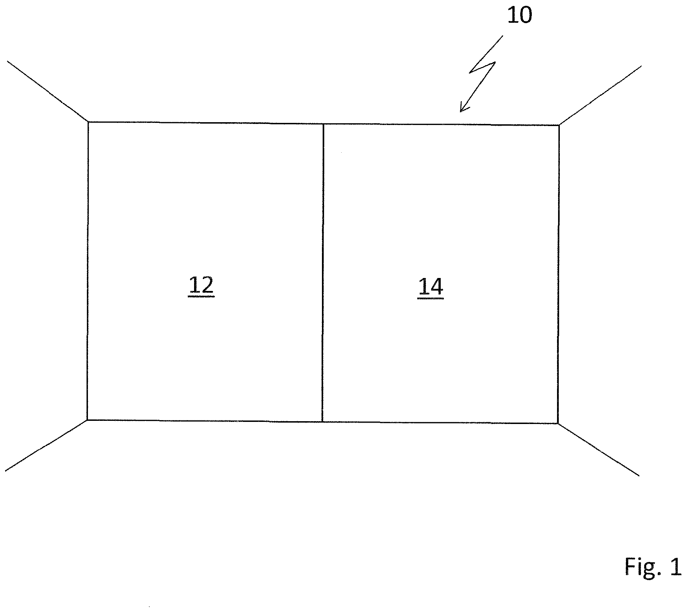

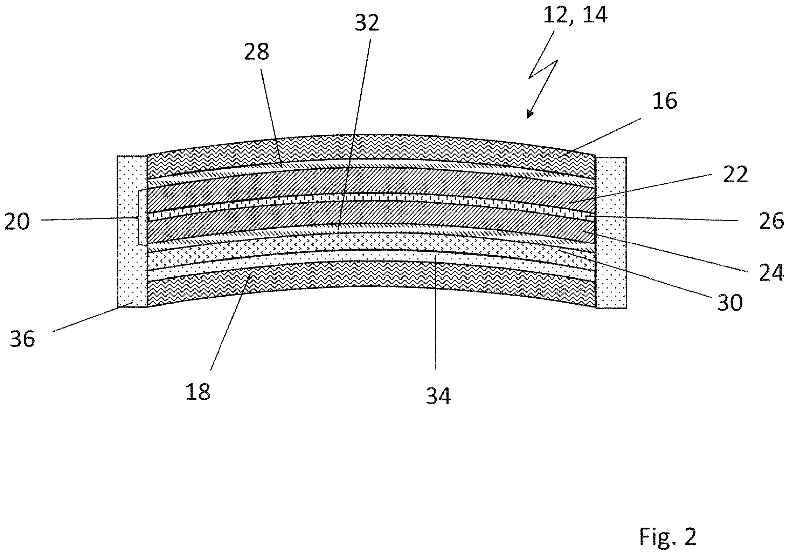

In den Figuren 1 und 2 ist ein Fahrzeugdach 10 eines ansonsten nicht näher dargestellten Kraftfahrzeuges gezeigt. Das Fahrzeugdach 10 ist ein Panoramadach, das mit einem verstellbaren Deckelelement 12 und einem Festdachelement 14 versehen ist. Diese sind jeweils als Glaselement und mithin als Fahrzeugscheibe ausgebildet. Das Deckelelement 12 und das Festdachelement 14 haben jeweils den gleichen Schichtaufbau, der mit einer Beschattungsanordnung versehen ist und der anhand Figur 2 dargestellt ist.

Die jeweils als Fahrzeugscheibe ausgebildeten Dachelemente 12 und 14 umfassen jeweils einen Scheibenkörper 16, der aus einer entlang einer Dachlängsrichtung und entlang einer Dachquerrichtung gewölbten Glasplatte gebildet ist und die Außenhaut der entsprechenden Fahrzeugscheibe bildet. An der Innenseite umfassen die beiden Dachelemente 12 und 14 jeweils einen Scheibeninnenkörper 18, das heißt einen zweiten Scheibenkörper, der ebenfalls aus einer gewölbten Glasplatte gebildet ist. Der Scheibenkörper 16 und der Scheibeninnenkörper 18 haben jeweils eine Dicke von etwa 2,1 mm und eine einander folgende dreidimensionale Wölbung.

Zwischen dem Scheibenkörper 16 und dem Scheibeninnenkörper 18 ist eine Flüssigkristallanordnung 20 angeordnet, die Bestandteil einer Beschattungsanordnung ist und die zwei Polycarbonatfolien 22 und 24 umfasst, zwischen denen eine einzige Flüssigkristallzelle 26 angeordnet ist. Die beiden transparenten Polycarbonatfolien 22 und 24 haben jeweils eine Dicke von etwa 100 µm. Um die Flüssigkristallzelle 26 zwischen einem Transmissionszustand und einem Sperrzustand schalten zu können, sind in die Flüssigkristallanordnung 20 an den Innenseiten der Polycarbonatfolien 22 und 24 leitfähige Schichten integriert, die über eine entsprechende, nicht näher dargestellte Kontaktierung mit einem Bordnetz des betreffenden Fahrzeugs verbunden sind. Die Flüssigkristallanordnung 20 stellt eine erste Funktionsfolienanordnung dar.

Die Flüssigkristallanordnung 20 ist über eine Klebstoffschicht 28, die aus einem ersten Klebstoffsystem gebildet ist, an den ersten Scheibenkörper 16 angebunden.

Die Beschattungsanordnung umfasst des Weiteren eine Polarisatorschicht 30, die über eine ebenfalls aus dem ersten Klebstoffsystem gebildete Klebstoffschicht 32 an die Flüssigkristallanordnung 20 angebunden ist und die einen Linearpolarisator umfasst, dessen Polarisationsrichtung rechtwinkelig zu der Polarisationsrichtung der Flüssigkristallzelle in deren Sperrstellung ausgerichtet ist. Die Polarisatorschicht 30 stellt eine zweite Funktionsfolienanordnung dar.

Der Scheibeninnenkörper 18 ist über eine Klebstoffschicht 34, die aus einem zweiten Klebstoffsystem 34 gebildet ist, an die Polarisatorschicht 30 angebunden.

Des Weiteren umfasst der in Figur 2 dargestellte Scheibenverbund, der die beiden Scheibenkörper 16 und 18, die Flüssigkristallanordnung 20, die Polarisatorschicht 30 und die Klebstoffschichten 28, 32 und 34 umfasst, eine Randversiegelung 36, die aus dem zweiten Klebstoffsystem gefertigt ist, aus dem die Klebstoffschicht 34 besteht, und die die Ränder der vorstehend genannten Schichten des Scheibenverbundes übergreift.

Das erste Klebstoffsystem, aus dem die beiden Klebstoffschichten 28 und 32 gebildet sind, besteht aus einem Zweikomponenten-Silikon-Kleber, der im ausgehärteten Zustand transparent ist. Das die Klebstoffschicht 34 und die Randversiegelung 36 bildende zweite Klebstoffsystem ist ebenfalls aus einem Zweikomponenten-Silikon-Kleber gebildet, der im ausgehärteten Zustand transparent ist. Die beiden Klebstoffsysteme können die gleiche chemische Zusammensetzung haben.

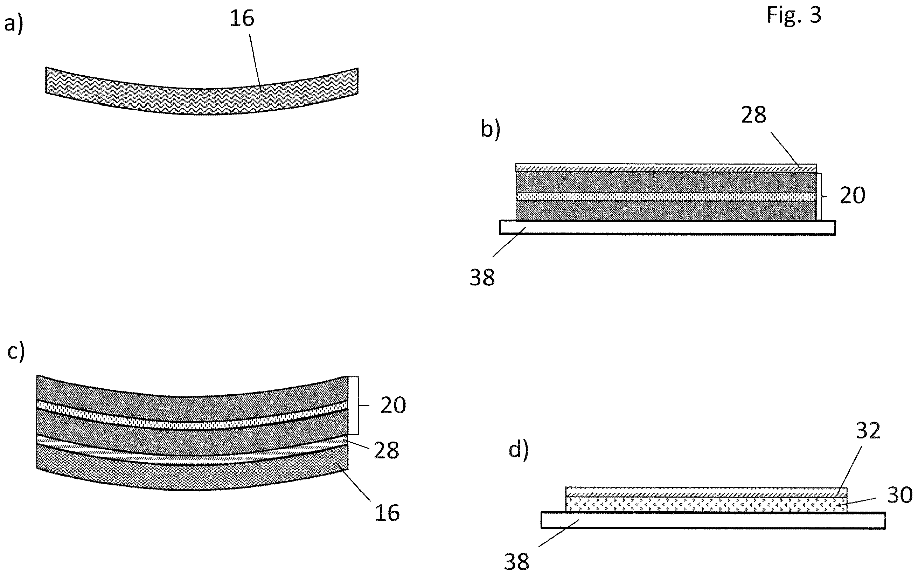

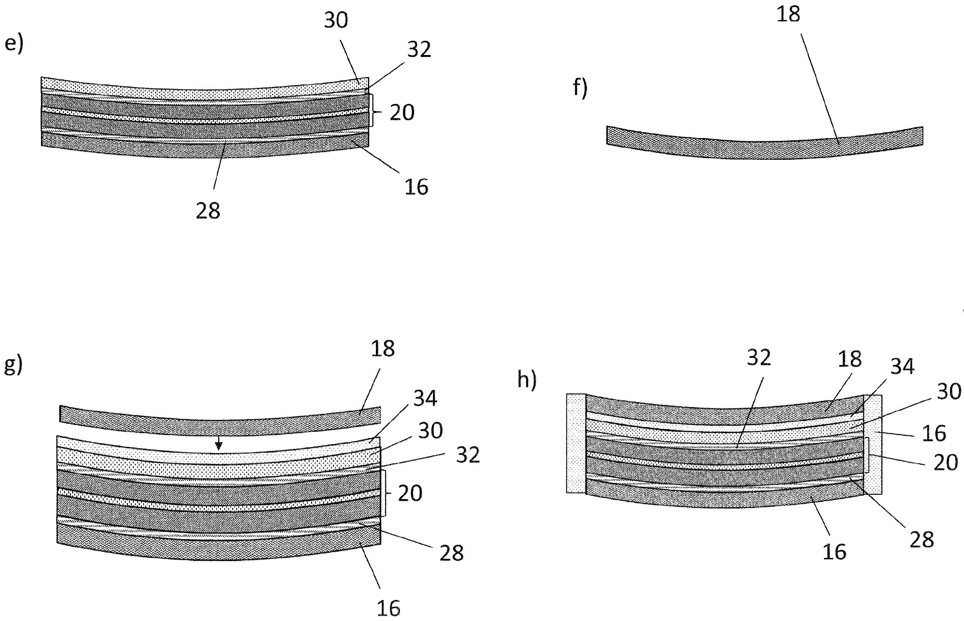

Die Herstellung der anhand der Figuren 1 und 2 dargestellten Fahrzeugscheibe wird nachfolgend anhand der Figuren 3a bis 3h erläutert.

In einem ersten Verfahrensschritt wird der die Außenhaut bildende erste Scheibenkörper 16 bereitgestellt und in Überkopflage in ein Fügewerkzeug eingelegt (Figur 3a). Anschließend wird die eine Funktionsfolienanordnung darstellende Flüssigkristallanordnung 20 bereitgestellt und auf einen Vakuumtisch 38 aufgelegt, so dass sie eine plane, ebene Form und eine waagerechte Ausrichtung hat. Daraufhin wird in flüssiger Form das erste Klebstoffsystem, das die Klebstoffschicht 28 bilden soll, auf die Flüssigkristallanordnung 20 aufgebracht. Gravitationsbedingt bildet das aus einem Zweikomponenten-Silikon-Kleber gebildete Klebstoffsystem über die gesamte Flüssigkristallanordnung 20 eine konstante Schichtstärke aus. In diesem Zustand lässt man das erste Klebstoffsystem zu der Klebstoffschicht 28 aushärten (vgl. Figur 3b). Die Aushärtzeit beträgt beispielsweise zwischen 1 und 15 Minuten.

Nach dem Aushärten des ersten Klebstoffsystems wird in einem weiteren Verfahrensschritt die Flüssigkristallanordnung 20 in dem Fügewerkzeug über die ein hohes Haftvermögen aufweisende Klebstoffschicht 28 an die eine konkave Wölbung aufweisende Innenseite des Scheibenkörpers 16 angebunden, so dass die Flüssigkristallanordnung 20 der Wölbung des Scheibenkörpers 16 folgt (vgl. Figur 3c). Das Anbinden der Flüssigkristallanordnung 20 an den Scheibenkörper 16 erfolgt bei Raumtemperatur und mit geringem, beispielsweise manuell oder nach einem Rollenlaminationsverfahren aufgebrachtem Druck.

In einem anschließenden, in Figur 3d dargestellten Verfahrensschritt wird die Funktionsfolienanordnung, die die Polarisatorschicht 30 bildet, auf einen Vakuumtisch 38 aufgelegt, so dass sie ebenfalls eine plane, ebene Form und eine waagerechte Ausrichtung hat. Auf die Polarisatorschicht 30 wird dann in flüssiger Form wiederum das erste Klebstoffsystem aufgebracht, welches dann die Klebstoffschicht 32 bildet. Gravitationsbedingt bildet das flüssige Klebstoffsystem über die gesamte Polarisatorschicht 30 hinweg die gleiche Schichtstärke aus. Auf dem Vakuumtisch 38 lässt man dann das Klebstoffsystem zu der Klebstoffschicht 32 aushärten, die ein hohes Haftvermögen hat.

Nach dem Aushärten der Klebstoffschicht 32 wird die Polarisatorschicht 30 in dem Fügewerkzeug an die Flüssigkristallanordnung 20 angebunden. Die Polarisatorschicht 30 folgt damit ebenfalls der Wölbung des ersten Scheibenkörpers 16 (vgl. Figur 3e).

Anschließend wird der zweite, den Scheibeninnenkörper 18 bildende Scheibenkörper bereitgestellt (vgl. Figur 4f). Zudem wird in das Fügewerkzeug ein zweites Klebstoffsystem zur Ausbildung der Klebstoffschicht 34 auf die Innenseite der Polarisatorschicht 30 aufgebracht. Das zweite Klebstoffsystem besteht ebenfalls aus einem Zweikomponenten-Silikon-Kleber. Der Scheibeninnenkörper 18 wird dann im nassen, ausgehärteten Zustand des zweiten Klebstoffsystems in das Fügewerkzeug eingelegt und über das zweite Klebstoffsystem an die Innenseite der Polarisatorschicht 30 angebunden (vgl. Figur 3g). Gleichzeitig wird in dem Fügewerkzeug aus dem zweiten Klebstoffsystem die Randversiegelung 36 ausgebildet (vgl. Figur 3h). Sobald das zweite Klebstoffsystem zu der Klebstoffschicht 34 und zu der Randversiegelung 36 ausgehärtet ist, kann der fertig verfügte Scheibenverbund aus dem Fügewerkzeug entnommen werden, der dann noch mit einer Randumschäumung aus Polyurethan versehen werden kann.

### Bezugszeichenliste

- 10: Fahrzeugdach
- 12: Deckelelement
- 14: Festdachelement
- 16: Scheibenkörper
- 18: Scheibeninnenkörper
- 20: Flüssigkristallanordnung
- 22: Polycarbonatfolie
- 24: Polycarbonatfolie
- 26: Flüssigkristallzelle
- 28: Klebstoffschicht
- 30: Polaristorschicht
- 32: Klebstoffschicht
- 34: Klebstoffschicht
- 36: Randversiegelung
- 38: Vakuumtisch

## Patentansprüche

1. Verfahren zur Herstellung einer Fahrzeugscheibe mit einem ersten gewölbten Scheibenkörper (16) und einem zweiten gewölbten Scheibenkörper (18) und mindestens einer zwischen den beiden Scheibenkörpern (16, 18) angeordneten Funktionsfolienanordnung, umfassend folgende Schritte:
- Bereitstellen des ersten gewölbten Scheibenkörpers (16), welcher eine Innenseite und eine Außenseite aufweist;
- Bereitstellen der Funktionsfolienanordnung und Anordnen derselben in planer und ebener Form mit einer waagerechten Ausrichtung;
- Aufbringen eines ersten Klebstoffsystems auf eine Fläche der Funktionsfolienanordnung, so dass das Klebstoffsystem an der Funktionsfolienanordnung in ausgehärteter Form vorliegt;
- Anformen der mit dem ausgehärteten Klebstoffsystem versehenen Funktionsfolienanordnung an der Innenseite des ersten Scheibenkörpers (16), so dass die Funktionsfolienanordnung einer Wölbung des ersten Scheibenkörpers (16) folgt;
- Bereitstellen des zweiten gewölbten Scheibenkörpers (18) und Auftragen eines zweiten Klebstoffsystems in flüssiger Form;
- Anbinden des zweiten Scheibenkörpers (18) mittels des zweiten Klebstoffsystems in dessen flüssigen Zustand zur Herstellung eines Scheibenverbundes, der den ersten und den zweiten Scheibenkörper (16, 18) umfasst; und
- anschließendes Aushärten des zweiten Klebstoffsystems.

2. Verfahren nach Anspruch 1, **dadurch gekennzeichnet, dass** mehrere Funktionsfolienanordnungen bereitgestellt und jeweils mit dem ersten Klebstoffsystem versehen werden, so dass dieses auf der jeweiligen Funktionsfolienanordnung in ausgehärteter Form vorliegt.

3. Verfahren nach Anspruch 2, **dadurch gekennzeichnet, dass** die mehreren Funktionsfolienanordnungen nacheinander und übereinander an der Innenseite des ersten gewölbten Scheibenkörpers (16) angeformt werden.

4. Verfahren nach einem der Ansprüche 1 bis 3, **dadurch gekennzeichnet, dass** das zweite Klebstoffsystem eine Zusammensetzung hat, die der Zusammensetzung des ersten Klebstoffsystems entspricht.

5. Verfahren nach einem der Ansprüche 1 bis 4, **dadurch gekennzeichnet, dass** das erste Klebstoffsystem in flüssiger Form auf die eben angeordnete Funktionsfolienanordnung aufgebracht wird und dann auf der Funktionsfolienanordnung in deren ebenen Anordnung aushärtet.

6. Verfahren nach einem der Ansprüche 1 bis 4, **dadurch gekennzeichnet, dass** das erste Klebstoffsystem in Form einer Einschicht-Kleberfolie auf die Funktionsfolienanordnung aufgebracht wird.

7. Verfahren nach einem der Ansprüche 1 bis 6, **dadurch gekennzeichnet, dass** die Funktionsfolienanordnung beim Aufbringen des ersten Klebstoffsystems auf einen Vakuum-Tisch (38) aufgelegt wird.

8. Verfahren nach einem der Ansprüche 1 bis 7, **dadurch gekennzeichnet, dass** die Innenseite des ersten Scheibenkörpers (16) eine konvexe Wölbung hat.

9. Verfahren nach einem der Ansprüche 1 bis 8, **dadurch gekennzeichnet, dass** beim Anbinden des zweiten Scheibenkörpers (18) an die Funktionsfolienanordnung eines der beiden Scheibenelemente (16) unten angeordnet ist und eine konkav gewölbte Seite des unten angeordneten Scheibenkörpers (16) nach oben weist.

10. Verfahren nach einem der Ansprüche 1 bis 9, **dadurch gekennzeichnet, dass** der Scheibenverbund an seinem umlaufenden Rand mit einer Randversiegelung (36) versehen wird.

11. Verfahren nach Anspruch 10, **dadurch gekennzeichnet, dass** die Randversiegelung (36) aus dem zweiten Klebstoffsystem gebildet wird.

12. Verfahren nach einem der Ansprüche 1 bis 11, **dadurch gekennzeichnet, dass** das erste Klebstoffsystem aus einem Zweikomponentenkleber, insbesondere einem Zweikomponenten-Silikon-Kleber gebildet ist.

13. Verfahren nach einem der Ansprüche 1 bis 12, **dadurch gekennzeichnet, dass** es bei einer Temperatur durchgeführt wird, die zwischen 10°C und 50°C liegt.

14. Verfahren nach einem der Ansprüche 1 bis 13, **dadurch gekennzeichnet, dass** die Funktionsfolienanordnung eine Flüssigkristallanordnung (20) umfasst.

15. Verfahren nach einem der Ansprüche 1 bis 14, **dadurch gekennzeichnet, dass** die Funktionsfolienanordnung eine Polarisatorschicht (30) umfasst.

## Claims

1. A method for producing a window pane of a vehicle, said window pane having a first curved window pane body (16) and a second curved window pane body (18) and at least one functional film structure which is disposed between the two window pane bodies (16, 18), the method comprising the following steps:
- providing the first curved window pane body (16), which has an inner surface and an outer surface;
- providing the functional film structure and arranging the same in a planar and level manner with a horizontal orientation;
- applying a first adhesive system to a surface of the functional film structure in such a manner that the adhesive system is present at the functional film structure in hardened form;
- moulding the functional film structure which is provided with the hardened adhesive system to the inner surface of the first window pane body (16) in such a manner that the functional film structure follows a curvature of the first window pane body (16);
- providing the second curved window pane body (18) and applying a second adhesive system in liquid form;
- attaching the second window pane body (18) by means of the second adhesive system in its liquid form to produce a pane compound which comprises the first and the second window pane body (16, 18); and
- subsequently hardening the second adhesive system.

2. The method according to claim 1, **characterised in that** multiple functional film structures are provided and are each provided with the first adhesive system so that the latter is present in hardened form on the respective functional film structure.

3. The method according to claim 2, **characterised in that** the multiple functional film structures are moulded to the inner surface of the first curved window pane body (16) subsequently and one on top of the other.

4. The method according to any one of the claims 1 to 3, **characterised in that** the second adhesive system has a composition which corresponds to the composition of the first adhesive system.

5. The method according to any one of the claims 1 to 4, **characterised in that** the first adhesive system is applied to the planar functional film structure in liquid form and then hardens on the planar functional film structure.

6. The method according to any one of the claims 1 to 4, **characterised in that** the first adhesive system is applied to the functional film structure in the form of a one-layer adhesive film.

7. The method according to any one of the claims 1 to 6, **characterised in that** the functional film structure is placed onto a vacuum table (38) when the first adhesive system is being applied.

8. The method according to any one of the claims 1 to 7, **characterised in that** the inner surface of the first window pane body (16) has a convex curvature.

9. The method according to any one of the claims 1 to 8, **characterised in that** when the second window pane body (18) is attached to the functional film structure, one of the two pane elements (16) is disposed on the bottom and a concave side of the window pane body (16) which is on the bottom faces upwards.

10. The method according to any one of the claims 1 to 9, **characterised in that** the window pane compound is provided with an edge seal (36) on its circumferential edge.

11. The method according to claim 10, **characterised in that** the edge seal (36) is formed from the second adhesive system.

12. The method according to any one of the claims 1 to 11, **characterised in that** the first adhesive system is formed from a two-component adhesive, in particular a two-component silicone adhesive.

13. The method according to any one of the claims 1 to 12, **characterised in that** it is carried out at a temperature between 10 °C and 50 °C.

14. The method according to any one of the claims 1 to 13, **characterised in that** the functional film structure comprises a liquid crystal assembly (20).

15. The method according to any one of the claims 1 to 14, **characterised in that** the functional film structure comprises a polariser layer (30).

## Revendications

1. Procédé de fabrication d'une vitre d'un véhicule, ladite vitre ayant un premier corps de vitre (16) voûté et un deuxième corps de vitre (18) voûté et au moins un ensemble de films fonctionnels qui est disposé entre les deux corps de vitre (16, 18), le procédé comprenant les étapes suivantes :
- fournir le premier corps de vitre (16) voûté, qui a une face interne et une face externe ;
- fournir l'ensemble de films fonctionnels et disposer ledit ensemble sous forme plaine et plane avec une orientation horizontale ;
- appliquer un premier système adhésif à une surface de l'ensemble de films fonctionnels de sorte que le système adhésif est en place à l'ensemble de films fonctionnels sous forme durcie ;
- mouler l'ensemble de films fonctionnels qui est pourvu du système adhésif durci à la face interne du premier corps de vitre (16) de sorte que l'ensemble de films fonctionnels suit une voûte du premier corps de vitre (16) ;
- fournir le deuxième corps de vitre (18) voûté et appliquer un deuxième système adhésif sous forme liquide ;
- relier le deuxième corps de vitre (18) moyennant le deuxième système adhésif qui est sous forme liquide pour produire une vitre feuilletée qui comprend le premier et le deuxième corps de vitre (16, 18) ; et
- ensuite durcir le deuxième système adhésif.

2. Procédé selon la revendication 1, **caractérisé en ce que** plusieurs ensembles de film fonctionnels sont fournis qui sont chacun pourvus du premier système adhésif de sorte que celui-ci est en place sur l'ensemble de films fonctionnels respectif sous forme durcie.

3. Procédé selon la revendication 2, **caractérisé en ce que** les plusieurs ensembles de film fonctionnels sont moulés á la face interne du premier corps de vitre (16) voûté subséquemment et l'un au-dessus de l'autre.

4. Procédé selon l'une quelconque des revendications 1 à 3, **caractérisé en ce que** le deuxième système adhésif a une composition qui correspond à la composition du premier système adhésif.

5. Procédé selon l'une quelconque des revendications 1 à 4, **caractérisé en ce que** le premier système adhésif est appliqué à l'ensemble de films fonctionnels plain sous forme liquide et ensuite durcit sur l'ensemble de films fonctionnels plain.

6. Procédé selon l'une quelconque des revendications 1 à 4, **caractérisé en ce que** le premier système adhésif est appliqué à l'ensemble de films fonctionnels sous forme d'un film adhésif à une seule couche.

7. Procédé selon l'une quelconque des revendications 1 à 6, **caractérisé en ce que** l'ensemble de films fonctionnels est placé sur une table à vide (38) lorsque le premier système adhésif est appliqué.

8. Procédé selon l'une quelconque des revendications 1 à 7, **caractérisé en ce que** la face interne du premier corps de vitre (16) a une voûte convexe.

9. Procédé selon l'une quelconque des revendications 1 à 8, **caractérisé en ce que** lorsque le deuxième corps de vitre (18) est relié à l'ensemble de films fonctionnels, un des deux éléments de vitre (16) est disposé en bas et un côté concave du corps de vitre (16) qui est en bas est tourné vers le haut.

10. Procédé selon l'une quelconque des revendications 1 à 9, **caractérisé en ce que** la vitre feuilletée est pourvue d'un scellement de bordure (36) sur sa bordure circonférentielle.

11. Procédé selon la revendication 10, **caractérisé en ce que** le scellement de bordure (36) est formé à partir du deuxième système adhésif.

12. Procédé selon l'une quelconque des revendications 1 à 11, **caractérisé en ce que** le premier système adhésif est formé à partir d'une colle à deux composants, notamment un adhésif silicone à deux composants.

13. Procédé selon l'une quelconque des revendications 1 à 12, **caractérisé en ce que** le procédé est effectué à une température entre 10 °C et 50 °C.

14. Procédé selon l'une quelconque des revendications 1 à 13, **caractérisé en ce que** l'ensemble de films fonctionnels comprend un ensemble à cristaux liquides (20).

15. Procédé selon l'une quelconque des revendications 1 à 14, **caractérisé en ce que** l'ensemble de films fonctionnels comprend une couche polariseur (30).
